# EUROPÄISCHE PATENTSCHRIFT

(11) **EP 1 772 049 B1**
(45) Veröffentlichungstag und Bekanntmachung des Hinweises auf die Patenterteilung: **03.12.2008**
(21) Anmeldenummer: 06020538.2
(22) Anmeldetag: 29.09.2006
(51) Int. Cl.: A01C 23/00, B05B 1/14

(54) **Düse zum grobtropfigen Versprühen eines Fluids**
Nozzle for spraying large droplets
Buse pour pulveriser des fluides en grosses gouttelettes

(30) Priorität: 06.10.2005 DE 102005048604
(43) Veröffentlichungstag der Anmeldung: 11.04.2007
(73) Patentinhaber: Lechler GmbH, 72555 Metzingen (DE)
(72) Erfinder: Schenk, Thomas, 72639 Neuffen (DE); Gomes-Alves, Joaquim, 72764 Reutlingen (DE)
(74) Vertreter: Patentanwälte Ruff, Wilhelm, Beier, Dauster & Partner

(56) Entgegenhaltungen:
- DE-A1- 2 811 697
- DE-A1- 3 834 670

## Beschreibung

Die Erfindung betrifft eine Düse zum grobtropfigen Versprühen eines Fluids, insbesondere Flüssigdünger, mit einem Gehäuse mit einer Austrittskammer, wobei die Austrittskammer eine mittels einer Blende gebildete Eintrittsöffnung und eine Austrittsöffnung aufweist.

Beim Versprühen von Flüssigdünger muss auf eine grobtropfige Ausbringung geachtet werden. Dies deshalb, da kleine Tropfen stärkere Schäden auf dem Blattwerk von Pflanzen durch Sonneneinstrahlung verursachen als grobe Tropfen. Darüber hinaus soll die Auftreffgeschwindigkeit der Tropfen auf die Pflanzen gering sein, so dass das Blattwerk nicht beschädigt wird. Bei grobtropfiger Ausbringung ist darüber hinaus die Abdrift geringer. Grundsätzlich gilt, je empfindlicher die Pflanze ist, umso größer sollten die Spritztropfen und umso geringer sollte der Spritzdruck sein.

Aus der deutschen Offenlegungsschrift DE 38 34 670 A1 ist eine Flüssigdüngerdüse bekannt, die ein Gehäuse mit einer Austrittskammer hat, wobei die Austrittskammer eine mittels einer Blende gebildete Eintrittsöffnung und mehrere Austrittsöffnungen aufweist. Die Austrittsöffnungen sind in Form von mehreren radial in der Umfangswandung der Austrittskammer angeordnete Bohrungen realisiert. Solche Düsen werden als Mehrlochdüsen bezeichnet und sind grundsätzlich für das Ausbringen von Flüssigdünger geeignet. Problematisch ist bei Mehrlochdüsen, dass die Flüssigdüngerausbringung über die Fläche nicht immer gleichmäßig erfolgt und dadurch im Wachstum der gedüngten Pflanzen eine sogenannte Streifenbildung auftreten kann.

Eine weitere Mehrlochdüse zum Ausbringen von Flüssigdünger ist aus der britischen Offenlegungsschrift GB 22 56 818 A bekannt. Diese Flüssigdüngerdüse ist ebenfalls als Mehrlochdüse ausgebildet. Die die Austrittsöffnungen bildenden Bohrungen sind dabei in Umfangsrichtung so eng benachbart, dass sie sich im radial inneren Bereich überschneiden und somit einen erweiterten Bereich der Austrittskammer bilden.

Eine weitere Flüssigdüngerdüse ist aus der internationalen Patentveröffentlichung WO 03/017748 A1 bekannt. Die dort beschriebene Düse weist mehrere Austrittsbohrungen auf.

Eine weitere Flüssigdüngerdüse ist in dem US-Patent 5,076,497 gezeigt. Ein Flüssigkeitsstrahl wird dort über einen nach unten offenen U-Kanal ausgegeben und in dem U-Kanal ist ein schneidenartiger Diffusor angeordnet, um den Flüssigkeitsstrahl in Tropfen aufzubrechen und deren seitliche Verteilung zu verursachen.

Mit der Erfindung soll eine verstopfungsunempfindliche Düse für das grobtropfige Ausbringen von Fluid geschaffen werden, die eine vordefinierte Fluidverteilung auf einer besprühten Fläche sicherstellt und dadurch beispielsweise auch für die kombinierte Ausbringung von Pflanzenschutzmittel und Flüssigdünger geeignet ist.

Erfindungsgemäß wird diese Aufgabe durch eine Düse zum grobtropfigen Versprühen eines Fluids, insbesondere Flüssigdünger, mit einem Gehäuse mit einer Austrittskammer gelöst, wobei die Austrittskammer eine mittels einer Blende gebildete Eintrittsöffnung und eine Austrittsöffnung aufweist, bei der die Austrittsöffnung schlitzartig ausgebildet und stromabwärts der Blende ein korbartiger Einsatz angeordnet ist.

Die erfindungsgemäße Düse stellt somit eine Flachstrahldüse dar, die aufgrund der Blende und des Einsatzes jedoch mit starker Druckminderung betrieben wird. Dadurch liegt vor der Austrittsöffnung ein geringer Fluiddruck an, so dass grobe Tropfen gebildet werden, die langsam austreten. Mit der erfindungsgemäßen Düse lässt sich eine zeitlich konstante und einer vordefinierten Verteilungskurve, beispielsweise parabelförmig, folgende Flüssigkeitsverteilung auf der besprühten Fläche erzielen, so dass auch das kombinierte Versprühen von Pflanzenschutzmittel und Flüssigdünger möglich ist. Die Blende sorgt für die Einstellung eines gewünschten Volumenstroms; der der Blende nachgeschaltete korbartige Einsatz bewirkt eine starke Druckminderung und gleichzeitig eine gleichmäßige turbulente Verteilung des Fluids in der Austrittskammer. Dadurch wird das gesamte Volumen der Austrittskammer mit dem dann turbulent verwirbelten Fluidstrahl gefüllt, so dass die schlitzartige Austrittsöffnung vergleichsweise groß gewählt werden kann, um ein langsames Austreten grober Fluidtropfen zu begünstigen. Gemäß der Erfindung ist aber eine zweistufige Druckminderung und Verteilung des Fluidstahls vorgesehen, nämlich einmal durch die Blende und die nachfolgende abrupte Querschnittserweiterung und weiter durch den nachfolgenden korbartigen Einsatz. Der Druck fällt nach der Blende sehr stark ab und der Korb bildet eine homogene Strömung aus, die durch die Düsenöffnung sehr grobtropfig austritt.

In Weiterbildung der Erfindung beträgt im Betrieb der Düse ein Verhältnis zwischen einem Flüssigkeitsdruck stromaufwärts der Blende und einem Flüssigkeitsdruck in der Austrittskammer stromabwärts des korbartigen Einsatzes zwischen 100:1 und 50:1.

Durch eine derart starke Druckminderung entsteht eine grobe Tropfenverteilung, wobei die Tropfen aufgrund des niedrigen Drucks in der Austrittskammer dann auch mit niedriger Geschwindigkeit austreten.

In Weiterbildung der Erfindung weist die Austrittskammer einen kugelartigen Kammergrund auf und die Austrittsöffnung ist durch seitliches Anschneiden des kugelartigen Grundes gebildet.

Die seitliche Anordnung des Schlitzes sorgt für ein Austreten mit geringer Geschwindigkeit und groben Tropfen, da aus dem korbartigen Einsatz austretende Fluidstrahlen vom Kammergrund zurückgeworfen werden und erst dann aus der seitlichen Austrittsöffnung austreten. Durch das Anschneiden des kugelartigen Grundes entsteht, je nach der verwendeten Fräserform, eine gekrümmte Berandung des Austrittschlitzes, mit der die Flüssigkeitsmengenverteilung auf einer besprühten Fläche, insbesondere eine wünschenswerte parabelförmige Mengenverteilung, eingestellt werden kann.

In Weiterbildung der Erfindung ist eine Mittelachse der Austrittsöffnung in einem Winkel zwischen 50° und 80°, insbesondere 60°, zu einer Mittellängsachse der Austrittskammer angeordnet.

Auf diese Weise lässt sich eine gute Tropfenverteilung erzielen. Bei Anordnung der erfindungsgemäßen Düse an einer Feldspritze ist die Austrittsöffnung so angeordnet, dass ihre Mittelachse etwa 30° zur Horizontalen nach unten und entgegen der Fahrtrichtung geneigt ist. Diese Anordnung begünstigt eine niedrige Auftreffgeschwindigkeit der Flüssigkeitstropfen auf die Pflanzen.

In Weiterbildung der Erfindung ist die Austrittskammer zylinderartig ausgebildet und die, die Eintrittsöffnung bildende Blende und der stromabwärts der Blende angeordnete Einsatz sind konzentrisch zu einer Mittellängsachse der Austrittskammer angeordnet.

Eine zylinderartige Austrittskammer und die konzentrische Anordnung von Blende und Einsatz sorgen für eine gleichmäßige Fluidverteilung in der Austrittskammer und erleichtern die Herstellung der erfindungsgemäßen Düse.

In Weiterbildung der Erfindung ist der korbartige Einsatz in einer umlaufenden Seitenwandung mit Schlitzen und in einem Boden mit wenigstens einer Durchgangsbohrung versehen.

Eine solche topfartige Ausbildung des korbartigen Einsatzes erlaubt eine sehr wirkungsvolle Druckminderung und ein gründliches Aufreißen, Verteilen und Verwirbeln eines durch die Blende eintretenden Fluidstrahls.

In Weiterbildung der Erfindung ist der korbartige Einsatz kreiszylindrisch ausgebildet, die Schlitze sind in der umlaufenden Seitenwandung parallel zu einer Mittellängsachse des Einsatzes und in Umfangsrichtung gleichmäßig voneinander beabstandet angeordnet und in einer Bodenwandung des korbartigen Einsatzes ist die Durchgangsbohrung konzentrisch angeordnet.

Mittels einer solchen Kombination aus Schlitzen und Durchgangsbohrungen lässt sich eine gute Verteilung des Fluids in der Austrittskammer erreichen. Darüber hinaus ist bei der Herstellung als Spritzgussteil die Herstellung, insbesondere die Entformbarkeit, des korbartigen Einsatzes wesentlich erleichtert.

In Weiterbildung der Erfindung erstrecken sich die Schlitze im Wesentlichen über die gesamte Höhe der Seitenwandung und zu der, der Eintrittsöffnung abgewandten Unterseite der Bodenwandung.

In Weiterbildung der Erfindung ist ein Verhältnis der Querschnitte der Eintrittsöffnung und der Summe der Querschnitte der Durchtrittsöffnungen in dem korbartigen Einsatz größer als 1:5 und liegt insbesondere zwischen 1:5 und 1:12.

Auf diese Weise ist sichergestellt, dass eine Festlegung des Volumenstroms durch die erfindungsgemäße Düse durch die Blende mit der Eintrittsöffnung erfolgt und dass der korbartige Einsatz zu einer starken Druckminderung sowie zu einer gleichmäßigen Fluidverteilung der Austrittskammer beiträgt.

Weitere Merkmale und Vorteile der Erfindung ergeben sich aus den angefügten Ansprüchen und der nachfolgenden Beschreibung einer bevorzugten Ausführungsform der Erfindung im Zusammenhang mit den Zeichnungen. In den Zeichnungen zeigen:
- Fig. 1: eine perspektivische Ansicht in auseinandergezogener Darstellung der Einzelteile der erfindungsgemäßen Düse,
- Fig. 2: eine perspektivische Ansicht des korbartigen Einsatzes der Düse der Fig. 1,
- Fig. 3: eine Schnittansicht des Einsatzes der Fig. 2,
- Fig. 4: eine Seitenansicht der Düse der Fig. 1 und
- Fig. 5: eine Schnittansicht auf die Ebene V-V der Fig. 4.

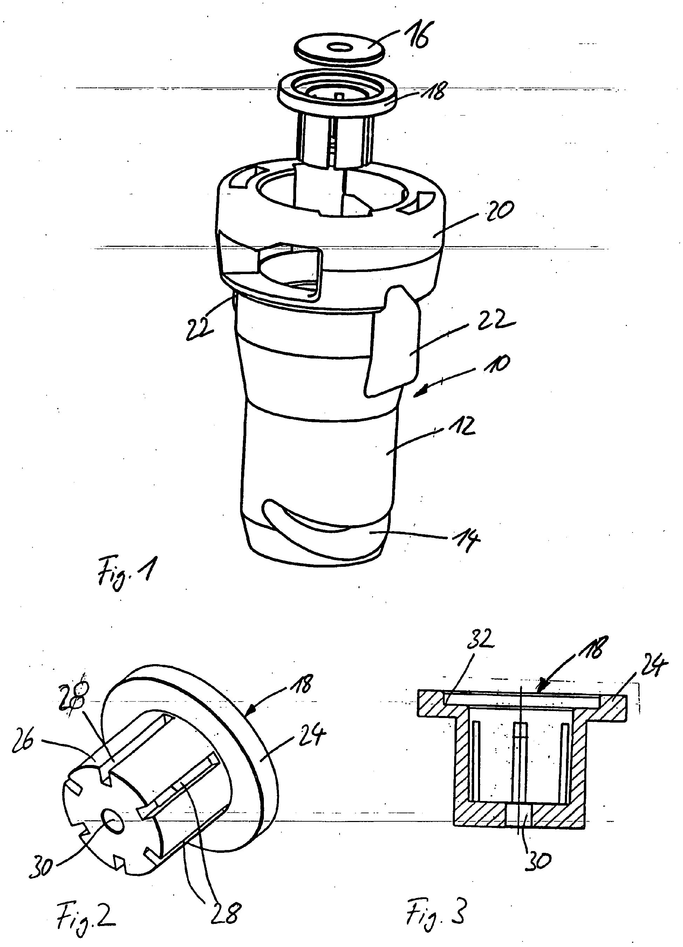

Die perspektivische Ansicht der Fig. 1 zeigt eine erfindungsgemäße Flüssigdüngerdüse 10 mit einem Gehäuse 12. In dem Gehäuse 12 ist eine in Fig. 1 nicht sichtbare Austrittskammer angeordnet, die mit einer schlitzartigen Austrittsöffnung 14 versehen ist. Eine Eintrittsöffnung in die Austrittskammer wird mittels einer ringförmigen Blende 16 gebildet, die wiederum in ein korbartiges Einsatzteil 18 eingesetzt ist. Das korbartige Einsatzteil 18 mit der darin angeordneten Blende 16 wird dann in das Düsengehäuse 12 eingesetzt und verschließt die Austrittskammer unter Freilassung lediglich der Eintrittsöffnung zu einer stromaufwärts liegenden Seite. Mittels der Flüssigdüngerdüse 10 versprühte Flüssigkeit tritt somit zunächst aus einer Versorgungsleitung auf die Blende 16 auf, passiert die in der Blende 16 angeordnete Eintrittsöffnung, strömt dann durch den korbartigen Einsatz 18 hindurch in die Austrittskammer und verlässt das Düsengehäuse 12 in Form eines Flachstrahls mit grobtropfiger Fluidverteilung durch die Austrittsöffnung 14.

Das Düsengehäuse 12 ist an seinem der Austrittsöffnung 14 abgewandten Ende mit einem umlaufenden Flansch 20 versehen, in dem in an und für sich bekannter Weise Führungen und Öffnungen eines Bajonettverschlusses vorgesehen sind. Um das Düsengehäuse 12 handhaben zu können und insbesondere auf ein passendes Gegenstück eines Bajonettverschlusses aufzusetzen, ist dieses mit gegenüberliegenden Vorsprüngen 22 versehen, die eine Angriffsfläche beim Verdrehen des Düsengehäuses 12 zum Einrasten des Bajonettverschlusses bilden.

In der perspektivischen Darstellung der Fig. 2 ist der Einsatz 18 detaillierter dargestellt. Der Einsatz 18 weist einen ringartigen Flansch 24 auf, der, wie in Fig. 1 zu erkennen ist, mit einer konzentrischen Ausnehmung versehen ist, in die dann die Blende 16 eingesetzt wird. Ausgehend von dem ringförmigen Flansch 24 ist ein kreiszylinderförmiges Topfbauteil 26 mit einer Umfangswandung und einem Boden vorgesehen. In der Umfangswandung sind gleichmäßig voneinander beabstandet radiale Schlitze 28 angeordnet, die sich im Wesentlichen über die gesamte Länge der Umfangswandung bis zu einer Unterseite des Bodens erstrecken, die dem ringförmigen Flansch 24 abgewandt ist.

Die bis zur Unterseite des Bodens durchgehende Ausbildung der Schlitze erlaubt die Herstellung des Einsatzes 18 in einem Spritzgusswerkzeug, ohne dass Teile der Spritzgussform vor dem Entformen zurückgezogen werden müssten. Aber auch bei mechanischer Herstellung, beispielsweise mittels eines Scheibenfräsers, erleichtert die bis zur Unterseite der Bodenfläche durchgehende Form der Schlitze deren Herstellung erheblich.

Konzentrisch im Boden des Topfbauteils 26 ist eine Durchgangsbohrung 30 angeordnet. Durch Veränderung des Querschnitts der Durchgangsbohrung 30 lässt sich der freie Querschnitt des Einsatzes 18 in einfacher Weise verändern, beispielsweise um unterschiedliche Volumenströme zu erhalten, ohne dass die Schlitze 28 abgeändert werden müssten.

In der Schnittansicht des Einsatzes 18 in Fig. 3 ist die Ausnehmung im ringförmigen Flansch 24 gut zu erkennen, in die dann die Blende 16 eingesetzt wird. Weiterhin ist in Fig. 3 zu erkennen, dass eine Innenwandung des Topfbauteils 26 sich in Richtung auf die Durchgangsbohrung 30 leicht verjüngt, so dass eine Entformbarkeit des Einsatzes 18 sichergestellt ist.

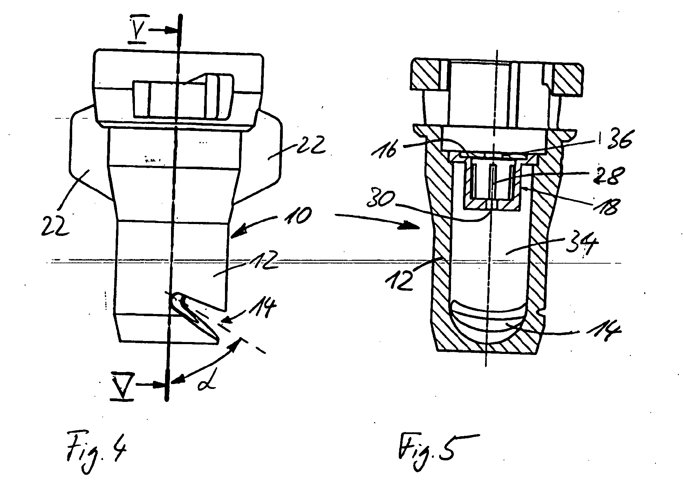

In der Seitenansicht der Fig. 4 ist die schlitzartige Form der Austrittsöffnung 14 gut zu erkennen. Eine Mittelachse der Austrittsöffnung 14 ist gegenüber der Vertikalen um einen Winkel α von 60° geneigt. Im eingebauten Zustand der Düse 10 an einer Feldspritze ist die Mittelachse der Austrittsöffnung 14 um etwa 30° zur Horizontalen geneigt und der Sprühfächer tritt aus der Austrittsöffnung 14 entgegen der Fahrtrichtung aus.

Die Austrittsöffnung 14 wird durch Anschneiden des Düsengehäuses 12 mittels eines Fräsers gebildet. Die Form des Fräsers bestimmt dabei die Berandung der Austrittsöffnung 14, wodurch die Flüssigkeitsmengenverteilung in dem erzeugten Sprühfächer beeinflusst werden kann.

In der Schnittansicht der Fig. 5 entlang der Linie V-V der Fig. 4 ist zu erkennen, dass eine Austrittskammer 34 im Düsengehäuse 12 eine grundsätzlich kreiszylindrische Form mit einem im Bereich der Austrittsöffnung 14 kugelförmigen Grund aufweist. Durch seitliches Anschneiden des kugelförmigen Grundes der Austrittskammer 34 entsteht, wie in Fig. 5 zu erkennen ist, die Austrittsöffnung 14 mit gekrümmter Berandung. Diese gekrümmte Berandung sorgt für eine gewünschte parabelförmige Flüssigkeitsmengenverteilung in dem erzeugten Flachstrahl.

Anhand der Schnittansicht der Fig. 5 ist auch gut zu erkennen, dass in das Düsengehäuse 12 der Düse 10 eintretendes Fluid zunächst die Blende 16 mit der Eintrittsöffnung 36 passieren muss. Nach Passieren der Eintrittsöffnung 36 tritt ein Fluidstrahl in das Innere des Einsatzes 18 ein und durch die dadurch erfolgende abrupte Querschnittserweiterung wird ein eintretender Fluidstrahl bereits aufgerissen. Der Fluidstrahl füllt dadurch das Innere des Einsatzes 18 aus und gelangt aus dem Inneren des Einsatzes 18 durch die Durchgangsbohrung 30 und die Schlitze 28 in die Austrittskammer 34. Da die Schlitze 28 über den gesamten Umfang des Einsatzes 18 verteilt sind, wird eine gleichmäßige Verteilung des Fluids in der Austrittskammer 34 erreicht. Die abrupte Querschnittserweiterung nach dem Passieren der Blende 16 und der korbartige Einsatz 18 sorgen für eine starke Druckminderung des Fluids. So liegt ein Verhältnis eines Drucks stromaufwärts der Blende 16 und eines Fluiddrucks in der Austrittskammer 34 stromabwärts des Einsatzes 18 zwischen 100:1 und 50:1. Die starke, zweistufige Druckminderung sorgt für ein langsames und grobtropfiges Austreten des Fluids durch die Austrittsöffnung 14 in Form eines Flachstrahls.

Es ist auch gut zu erkennen, dass die Blende 16 und der korbartige Einsatz 18 zwischen sich eine erste Kammer definieren und zwischem dem korbartigen Einsatz 18 und dem Düsengehäuse 12 ist als zweite Kammer die Austrittskammer 34 definiert. Indem der Fluidstrahl diese zwei Kammern passieren muss wird eine zweistufige starke Druckminderung erreicht, wobei der Flüssigkeitsdruck von der Zuleitung bis zum Austritt aus der Düse um das fünfzig- bis hundertfache abfällt.

## Patentansprüche

1. Düse zum grobtropfigen Versprühen eines Fluids, insbesondere Flüssigdünger, mit einem Gehäuse (12) mit einer Austrittskammer (34), wobei die Austrittskammer (34) eine mittels einer Blende (16) gebildete Eintrittsöffnung (36) und eine Austrittsöffnung (14) aufweist, **dadurch gekennzeichnet, dass** die Austrittsöffnung (14) schlitzartig ausgebildet, stromabwärts der Blende (16) ein korbartiger Einsatz (18) angeordnet ist und dass stromabwärts der Blende (16) und stromaufwärts des korbartigen Einsatzes eine abrupte Querschnittservveiterung vorgesehen ist.

2. Düse nach Anspruch 1, **dadurch gekennzeichnet, dass** im Betrieb der Düse ein Verhältnis zwischen einem Flüssigkeitsdruck stromaufwärts der Blende (16) und einem Flüssigkeitsdruck in der Austrittskammer (34) stromabwärts des korbartigen Einsatzes (18) zwischen 100:1 und 50:1 beträgt.

3. Düse nach Anspruch 1 oder 2, **dadurch gekennzeichnet, dass** die Austrittskammer (34) einen kugelartigen Kammergrund aufweist und die Austrittsöffnung (14) durch seitliches Anschneiden des kugelartigen Grundes gebildet ist.

4. Düse nach Anspruch 3, **dadurch gekennzeichnet, dass** eine Mittelachse der Austrittsöffnung (14) in einem Winkel zwischen 50° und 80°, insbesondere 60°, zu einer Mittellängsachse der Austrittskammer (34) angeordnet ist.

5. Düse nach wenigstens einem der vorstehenden Ansprüche, **dadurch gekennzeichnet, dass** die Austrittskammer (34) zylinderartig ausgebildet ist und die die Eintrittsöffnung (36) bildende Blende (16) und der stromabwärts der Blende (16) angeordnete Einsatz (18) konzentrisch zu einer Mittellängsachse der Austrittskammer (34) angeordnet sind.

6. Düse nach wenigstens einem der vorstehenden Ansprüche, **dadurch gekennzeichnet, dass** der korbartige Einsatz (18) in einer umlaufenden Seitenwandung mit Schlitzen (28) und in einem Boden mit wenigstens einer Durchgangsbohrung (30) versehen ist.

7. Düse nach Anspruch 6, **dadurch gekennzeichnet, dass** der korbartige Einsatz (18) kreiszylindrisch ausgebildet ist, die Schlitze (28) in der umlaufenden Seitenwandung parallel zur einer Mittellängsachse des Einsatzes (18) und in Umfangsrichtung gleichmäßig voneinander beabstandet angeordnet sind und dass in dem Boden die Durchgangsbohrung (30) konzentrisch angeordnet ist.

8. Düse nach Anspruch 7, **dadurch gekennzeichnet, dass** die Schlitze (28) sich im wesentlichen über die gesamte Höhe der Seitenwandung und bis zu der, der Eintrittsöffnung (36) abgewandten Unterseite des Bodens erstrecken.

9. Düse nach wenigstens einem der vorstehenden Ansprüche, **dadurch gekennzeichnet, dass** ein Verhältnis der Querschnitte der Eintrittsöffnung (36) und der Summe der Querschnitte der Durchtrittsöffnungen in dem korbartigen Einsatz größer als 1:5 ist und insbesondere zwischen 1:5 und 1:12 liegt.

10. Düse nach wenigstens einem der vorstehenden Ansprüche, **dadurch gekennzeichnet, dass** die Blende (16) auswechselbar in dem korbartigen Einsatz (18) angeordnet ist.

## Claims

1. Nozzle for spraying large droplets of a fluid, in particular liquid fertilizers, with a housing (12) with an exit chamber (34), where the exit chamber (34) has an entry opening (36) formed by a diaphragm (16) and an exit opening (14), **characterized in that** the exit opening (14) is designed as a slit, a basket-like insert (18) is arranged downstream of the diaphragm (16) and **in that** downstream of the diaphragm (16) and upstream of the basket-like insert an abrupt widening of the cross-section is provided.

2. Nozzle according to Claim 1, **characterized in that** during operation of the nozzle, a ratio between a liquid pressure upstream of the diaphragm (16) and a liquid pressure in the exit chamber (34) downstream of the basket-like insert (18) is between 100:1 and 50:1.

3. Nozzle according to Claim 1 or 2, **characterized in that** the exit chamber (34) has a rounded chamber bottom and the exit opening (14) is formed by a lateral cutting of the rounded bottom.

4. Nozzle according to Claim 3, **characterized in that** a central axis of the exit opening (14) is arranged at an angle of between 50° and 80°, in particular 60°, relative to a central longitudinal axis of the exit chamber (34).

5. Nozzle according to at least one of the preceding claims, **characterized in that** the exit chamber (34) is designed cylindrical and the diaphragm (16) forming the entry opening (36) and the insert (18) arranged downstream of the diaphragm (16) are arranged concentrically to a central longitudinal axis of the exit chamber (34).

6. Nozzle according to at least one of the preceding claims, **characterized in that** the basket-like insert (18) is provided inside an all-round side wall with slots (28) and in a bottom with at least one through-hole (30).

7. Nozzle according to Claim 6, **characterized in that** the basket-like insert (18) is designed circular-cylindrical, the slots (28) in the all-round side wall are arranged parallel to a central longitudinal axis of the insert (18) and equidistant from one another in the circumferential direction, and **in that** the through-hole (30) is arranged concentrically in the bottom.

8. Nozzle according to Claim 7, **characterized in that** the slots (28) extend substantially over the entire height of the side wall and to the underside of the bottom facing away from the entry opening (36).

9. Nozzle according to at least one of the preceding claims, **characterized in that** a ratio of the cross-sections of the entry opening (36) and the sum of the cross-sections of the passage openings in the basket-like insert is greater than 1:5 and in particular between 1:5 and 1:12.

10. Nozzle according to at least one of the preceding claims, **characterized in that** the diaphragm (16) is arranged interchangeable in the basket-like insert (18).

## Revendications

1. Buse pour pulvériser un fluide en grosses gouttelettes, en particulier de l'engrais liquide, avec un corps (12) comprenant une chambre d'éjection (34), sachant que la chambre d'éjection (34) présente un orifice d'entrée (36) formé au moyen d'un diaphragme (16) et un orifice de sortie (14), **caractérisée en ce que** l'orifice de sortie (14) a la forme d'une fente, qu'un élément inséré en forme de panier (18) est disposé en aval du diaphragme (16) dans le sens d'écoulement et qu'est prévu un élargissement abrupt de la coupe transversale en aval du diaphragme (16) et en amont de l'élément inséré en forme de panier dans le sens d'écoulement.

2. Buse selon la revendication 1, **caractérisée en ce que** lors du fonctionnement de la buse, un rapport entre une pression du liquide en amont du diaphragme (16) et une pression du liquide dans la chambre d'éjection (34) en aval de l'élément inséré en forme de panier (18) est compris entre 100:1 1 et 50:1.

3. Buse selon la revendication 1 ou 2, **caractérisée en ce que** la chambre d'éjection (34) présente un fond sphérique et que l'orifice de sortie (14) est formé par découpage latéral du fond sphérique.

4. Buse selon la revendication 3, **caractérisée en ce qu'**un axe médian de l'orifice de sortie (14) est disposé dans un angle compris entre 50° et 80°, en particulier de 60°, par rapport à un axe médian longitudinal de la chambre de sortie (34).

5. Buse selon au moins l'une des revendications précédentes, **caractérisée en ce que** la chambre d'éjection (34) est conçue de façon cylindrique et que le diaphragme (16) formant l'orifice d'entrée (36) et l'élément inséré (18) disposé en aval du diaphragme (16) sont placés concentriquement à un axe médian longitudinal de la chambre d'éjection (34).

6. Buse selon au moins l'une des revendications précédentes, **caractérisée en ce que** l'élément inséré en forme de panier (18) est pourvu de fentes (28) dans une paroi latérale circonférentielle et d'au moins un trou débouchant (30) dans le fond.

7. Buse selon la revendication 6, **caractérisée en ce que** l'élément inséré en forme de panier (18) présente une configuration cylindrique circulaire, que les fentes (28) dans la paroi latérale circonférentielle sont disposées parallèlement à un axe médian longitudinal de l'élément inséré (18) et à distance régulière les unes des autres dans le sens circonférentiel, et que le trou débouchant (30) est disposé de manière concentrique dans le fond.

8. Buse selon la revendication 7, **caractérisée en ce que** les fentes (28) s'étendent essentiellement sur toute la hauteur de la paroi latérale et jusqu'à la face inférieure du fond opposée à l'orifice d'entrée (36).

9. Buse selon au moins l'une des revendications précédentes, **caractérisée en ce qu'**un rapport des coupes transversales de l'orifice d'entrée (36) et de la somme des coupes des orifices de passage dans l'élément inséré en forme de panier est supérieur à 1:5, et est compris en particulier entre 1:5 et 1:12.

10. Buse selon au moins l'une des revendications précédentes, **caractérisée en ce que** le diaphragme (16) est disposé dans l'élément inséré en forme de panier (18) et qu'il peut être remplacé.
